(19) Europäisches Patentamt
European Patent Office
Office européen des brevets

(11) **EP 4 510 269 A1**

(12) **EUROPEAN PATENT APPLICATION**

(43) Date of publication:
19.02.2025 Bulletin 2025/08

(21) Application number: 24195041.9

(22) Date of filing: 16.08.2024

(51) International Patent Classification (IPC):
*H01M 10/0525* (2010.01)   *H01M 50/417* (2021.01)
*H01M 50/449* (2021.01)   *H01M 50/491* (2021.01)

(52) Cooperative Patent Classification (CPC):
H01M 50/491; H01M 10/0525; H01M 50/417;
H01M 50/449

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 16.08.2023 CN 202311032266

(71) Applicant: Ningde Amperex Technology Ltd.
Ningde City, Fujian 352100 (CN)

(72) Inventors:
• KONG, Gengjin
Ningde City, Fujian Province, People s Republic
of
China, 352100 (CN)

• WEI, Zengbin
Ningde City, Fujian Province, People s Republic
of
China, 352100 (CN)
• TAO, Xinghua
Ningde City, Fujian Province, People s Republic
of
China, 352100 (CN)

(74) Representative: Icosa
83 avenue Denfert-Rochereau
75014 Paris (FR)

(54) **SECONDARY BATTERY AND ELECTRONIC APPARATUS**

(57) A secondary battery includes a positive electrode plate, a negative electrode plate, an electrolyte, and a separator. The separator includes a base film, where a pore size distribution of the base film is a bimodal distribution. A pore size on a side of the base film facing the negative electrode plate is larger than a pore size on a side of the base film facing the positive electrode plate.

The pore size on the side of the base film facing the negative electrode plate is 60 nm to 500 nm, and the pore size on the side of the base film facing the positive electrode plate is 5 nm to 55 nm. This can improve the fast charging performance of the secondary battery and alleviate lithium precipitation.

FIG. 1

EP 4 510 269 A1

**EP 4 510 269 A1**

Description

## TECHNICAL FIELD

This application relates to the field of electrochemical technologies, and in particular, to a secondary battery and an electronic apparatus.

## BACKGROUND

During the charging and discharging process of a lithium-ion battery, lithium ions continuously intercalate and deintercalate between positive and negative electrode materials, and shuttle back and forth between positive and negative electrodes through an electrolyte, thereby allowing for the normal use of the lithium-ion battery. As the requirement for fast charging performance of lithium-ion batteries increases, it is necessary to continuously enhance the transmission speed of lithium ions between the positive and negative electrodes to improve the fast charging performance.

Currently, the capability of the positive electrode material in intercalation and deintercalation of lithium ions is different from the capability of the negative electrode material in intercalation and deintercalation of lithium ions. When the charging rate is high, the number of lithium ions deintercalating from the positive electrode material is greater than the number of lithium ions intercalating into the negative electrode material, which causes lithium ions failing to intercalate into the negative electrode material to precipitate on the surface of the negative electrode material, leading to severe lithium precipitation.

## SUMMARY

This application is intended to provide a secondary battery and an electronic apparatus, so as to improve fast charging performance of the secondary battery and alleviate lithium precipitation.

It should be noted that in specific embodiments of this application, an example in which a lithium-ion battery is used as a secondary battery is used to illustrate this application. However, the secondary battery in this application is not limited to the lithium-ion battery. Specific technical solutions are described below.

A first aspect of this application provides a secondary battery. The secondary battery includes a positive electrode plate, a negative electrode plate, an electrolyte, and a separator. The separator includes a base film, where a pore size distribution of the base film is a bimodal distribution. A pore size on a side of the base film facing the negative electrode plate is larger than a pore size on a side of the base film facing the positive electrode plate. The pore size on the side of the base film facing the negative electrode plate is 60 nm to 500 nm, and preferably, the pore size on the side of the base film facing the negative electrode plate is 80 nm to 300 nm. The pore size on the side of the base film facing the positive electrode plate is 5 nm to 55 nm, and preferably, the pore size on the side of the base film facing the positive electrode plate is 15 nm to 55 nm. Through control of the pore size distribution of the base film, the pore size on the side of the base film facing the negative electrode plate is kept larger than the pore size on the side of the base film facing the positive electrode plate, and the pore size on the side of the base film facing the negative electrode plate and the pore size on the side of the base film facing the positive electrode plate are kept within the range in this application. This can improve the fast charging performance of the secondary battery and alleviate lithium precipitation.

In an embodiment of this application, thickness of a region of the side of the base film facing the negative electrode plate is H1, thickness of a region of the side of the base film facing the positive electrode plate is H2, and $50\% \leq H1/(H1+H2) \times 100\% \times 80\%$. Preferably, $55\% \leq H1/(H1+H2) \times 100\% \leq 80\%$. Controlling the value of $H1/(H1+H2) \times 100\%$ within the range in this application allows for moderate transmission paths of lithium ions in different regions of the separator, thereby controlling a transmission velocity of lithium ions in the separator, allowing for better charging and discharging rate performance of the secondary battery, alleviating lithium precipitation, and improving the cycling performance of the secondary battery.

In an embodiment of this application, the side of the base film facing the negative electrode plate includes a first polymer, and the first polymer includes polyethylene. A weight-average molecular weight of the first polymer is 600000 to 1500000, and preferably, the weight-average molecular weight of the first polymer is 600000 to 1000000. A melting point of the first polymer is 134°C to 140°C, and preferably, the melting point of the first polymer is 134°C to 139°C. Due to the relatively high weight-average molecular weight and melting point of the first polymer, the side of the base film facing the negative electrode plate is controlled to include the first polymer, and the type, weight-average molecular weight, and melting point of the first polymer are controlled within the range in this application, so that the fiber of the separator is difficult to melt during the final formation of the separator. This allows for a larger pore size on the side of the base film facing the negative electrode plate and higher strength of the separator, thereby improving the safety performance of the secondary battery.

In an embodiment of this application, the side of the base film facing the negative electrode plate further includes thermal stable resin. The thermal stable resin includes at least one of polypropylene or poly(4-methylpentene), and a melting point of the thermal stable resin is 160°C to 260°C. Due to the high melting point of the thermal stable resin, the side of the base film facing the negative electrode plate is controlled to further include the thermal stable resin, and the type and melting point of the thermal stable resin are controlled within the range in this application, so that the high-temperature stability of the separator can be enhanced.

In an embodiment of this application, the side of the base film facing the negative electrode plate further includes thermal stable resin, the thermal stable resin includes a cyclic olefin copolymer, and a glass transition temperature of the cyclic olefin copolymer is 80°C to 160°C. The side of the base film facing the negative electrode plate is controlled to further include the thermal stable resin, and the type and glass transition temperature of the thermal stable resin are controlled within the range in this application, so that the high-temperature stability of the separator can be enhanced.

In an embodiment of this application, the side of the base film facing the positive electrode plate includes a second polymer, and the second polymer includes polyethylene. A weight-average molecular weight of the second polymer is 200000 to 600000, and preferably, the weight-average molecular weight of the second polymer is 200000 to 500000. A melting point of the second polymer is 120°C to 134°C, and preferably, the melting point of the second polymer is 126°C to 132°C. Due to the relatively low weight-average molecular weight and melting point of the second polymer, the side of the base film facing the positive electrode plate is controlled to include the second polymer, and the type, weight-average molecular weight, and melting point of the second polymer are controlled within the range in this application, so that the fiber of the separator is easy to melt during the final formation of the separator. This allows for a smaller pore size on the side of the base film facing the positive electrode plate and a lower shutdown temperature and higher shutdown velocity of the separator, thereby improving the safety performance of the secondary battery.

In an embodiment of this application, a ratio of a conductivity of the base film to a conductivity of the electrolyte is 0.05 to 0.6, the conductivity of the electrolyte is 7 ms/cm to 20 ms/cm, and preferably, the conductivity of the electrolyte is 7.5 ms/cm to 15 ms/cm. The ratio of the conductivity of the base film to the conductivity of the electrolyte and the conductivity of the electrolyte are controlled within the range in this application, so that the optimal match between the conductivity of the separator and the conductivity of the electrolyte can be achieved, improving the fast charging and discharging performance of the secondary battery, alleviating lithium precipitation, and further improving the cycling performance of the secondary battery.

In an embodiment of this application, a contact angle between the electrolyte and the base film is 5° to 60°. Controlling the contact angle between the electrolyte and the base film within the range in this application is conducive to improving the wettability of the separator, thereby accelerating transmission of the electrolyte in a thickness direction of the separator, improving the fast charging and discharging performance of the secondary battery, and alleviating lithium precipitation.

A second aspect of this application provides an electronic apparatus including the secondary battery according to any one of the foregoing embodiments. Therefore, the electronic apparatus provided in this application has good use performance.

This application has the following beneficial effects:

This application provides a secondary battery and an electronic apparatus. The secondary battery includes a positive electrode plate, a negative electrode plate, an electrolyte, and a separator. The separator includes a base film, where a pore size distribution of the base film is a bimodal distribution. A pore size on a side of the base film facing the negative electrode plate is larger than a pore size on a side of the base film facing the positive electrode plate. The pore size on the side of the base film facing the negative electrode plate is 60 nm to 500 nm, and the pore size on the side of the base film facing the positive electrode plate is 5 nm to 55 nm. Through control of the pore size distribution of the base film, the pore size on the side of the base film facing the negative electrode plate is kept larger than the pore size on the side of the base film facing the positive electrode plate, and the pore size on the side of the base film facing the negative electrode plate and the pore size on the side of the base film facing the positive electrode plate are kept within the range in this application. This can improve the fast charging performance of the secondary battery and alleviate lithium precipitation.

Certainly, when any product or method of this application is implemented, all advantages described above are not necessarily demonstrated simultaneously.

## BRIEF DESCRIPTION OF DRAWINGS

To describe the technical solutions in some embodiments of this application or in the prior art more clearly, the following briefly describes the accompanying drawings required for describing some embodiments or the prior art. Apparently, the accompanying drawings in the following description show some embodiments of this application, and persons of ordinary skill in the art may still derive others drawings from these accompanying drawings.

FIG. 1 is a pore size distribution diagram of a separator in Example 1-1 of this application; and
FIG. 2 is a scanning electron microscope (SEM) image of a separator in a thickness direction in Example 1-14 of this application.

## DETAILED DESCRIPTION

The following clearly describes the technical solutions in some embodiments of this application with reference to the accompanying drawings in some embodiments of this application. Apparently, the described embodiments are only some rather than all of these embodiments of this application. All other embodiments obtained by persons skilled in the art based on this application shall fall within the protection scope of this application.

It should be noted that in specific embodiments of this application, an example in which a lithium-ion battery is used as a secondary battery is used to illustrate this application. However, the secondary battery in this application is not limited to the lithium-ion battery.

This application provides a secondary battery including a positive electrode plate, a negative electrode plate, an electrolyte, and a separator. The separator includes a base film, where a pore size distribution of the base film is a bimodal distribution. A pore size on a side of the base film facing the negative electrode plate is larger than a pore size on a side of the base film facing the positive electrode plate. The pore size on the side of the base film facing the negative electrode plate is 60 nm to 500 nm, and preferably, the pore size on the side of the base film facing the negative electrode plate is 80 nm to 300 nm. For example, the pore size on the side of the base film facing the negative electrode plate may be 60 nm, 70 nm, 90 nm, 100 nm, 110 nm, 130 nm, 150 nm, 170 nm, 190 nm, 200 nm, 210 nm, 230 nm, 250 nm, 270 nm, 290 nm, 300 nm, 310 nm, 330 nm, 350 nm, 370 nm, 390 nm, 400 nm, 410 nm, 430 nm, 450 nm, 470 nm, 490 nm, or 500 nm, or falls within a range defined by any two of these values. The pore size on the side of the base film facing the positive electrode plate is 5 nm to 55 nm, and preferably, the pore size on the side of the base film facing the positive electrode plate is 15 nm to 55 nm. For example, the pore size on the side of the base film facing the positive electrode plate may be 5 nm, 7 nm, 9 nm, 10 nm, 11 nm, 13 nm, 15 nm, 17 nm, 19 nm, 20 nm, 21 nm, 23 nm, 25 nm, 27 nm, 29 nm, 30 nm, 31 nm, 33 nm, 35 nm, 37 nm, 39 nm, 40 nm, 41 nm, 43 nm, 45 nm, 47 nm, 49 nm, 50 nm, 51 nm, 53 nm, or 55 nm, or falls within a range defined by any two of these values.

The inventors have found through research that currently, the capability of a positive electrode material in intercalation and deintercalation of lithium ions is generally higher than the capability of a negative electrode material in intercalation and deintercalation of lithium ions. Increasing the pore size on the side of the base film facing the negative electrode plate provides a larger transmission space for lithium ions, facilitating migration of lithium ions. Additionally, a larger pore size allows for more electrolyte accommodated, supplementing the rapidly consumed electrolyte. Reducing the pore size on the side of the base film facing the positive electrode plate allows for narrow transmission channels for lithium ions and long transmission paths, providing a certain hindering effect on diffusion of lithium ions, thereby achieving a controllable transmission velocity of lithium ions. When the pore size on the side of the base film facing the negative electrode plate is equal to the pore size on the side of the base film facing the positive electrode plate, transmission velocities of lithium ions in different regions of the separator are essentially the same, making it impossible to control the transmission velocity of lithium ions. At a high charging rate (for example, the charging rate is higher than 3C), the number of lithium ions deintercalating from the positive electrode material is greater than the number of lithium ions intercalating into the negative electrode material, which causes lithium ions failing to intercalate into the negative electrode material to precipitate on the surface of the negative electrode material, leading to severe lithium precipitation. When the pore size on the side of the base film facing the negative electrode plate is too small (for example, less than 60 nm), or the pore size on the side of the base film facing the positive electrode plate is too large (for example, greater than 55 nm), the transmission velocity of lithium ions in the separator cannot be effectively controlled, and the relationship between the number of lithium ions intercalating into the negative electrode material and the number of lithium ions deintercalating from the positive electrode material cannot be further controlled, thereby making it impossible to alleviate lithium precipitation. Therefore, when the pore size distribution of the base film is a bimodal distribution, the pore size on the side of the base film facing the negative electrode plate is larger than the pore size on the side of the base film facing the positive electrode plate, and the pore size on the side of the base film facing the negative electrode plate and the pore size on the side of the base film facing the positive electrode plate are within the range in this application, the separator can control the transmission velocity of lithium ions. At a high charging rate, after a certain number of lithium ions deintercalate from a positive electrode active material, the transmission speed of lithium ions on the side of the base film facing the positive electrode plate is slower, while the transmission speed of lithium ions on the side of the base film facing the negative electrode plate is faster. This allows the number of lithium ions intercalating into a negative electrode active material to be essentially equal to the number of lithium ions deintercalating from the positive electrode active material, thereby improving the fast charging performance of the secondary battery and alleviating lithium precipitation.

In an embodiment of this application, thickness of a region of the side of the base film facing the negative electrode plate is H1, and thickness of a region of the side of the base film facing the positive electrode plate is H2, and $50\% \leq H1/(H1+H2) \times 100\% \leq 80\%$. Preferably, $55\% \leq H1/(H1+H2) \times 100\% \leq 80\%$. For example, the value of $H1/(H1+H2) \times 100\%$ may be 50%, 52%, 54%, 55%, 56%, 58%, 60%, 62%, 64%, 66%, 68%, 70%, 72%, 74%, 76%, 78%, or 80%, or falls within a range defined by any two of these values. Controlling the value of H1/(H1+H2)×100% within the range in this application allows for moderate transmission paths of lithium ions in different regions of the separator, thereby controlling the transmission velocity of lithium ions in the separator, allowing for better charging and discharging rate performance of the secondary battery, alleviating lithium precipitation, and improving the cycling performance of the secondary battery.

In an embodiment of this application, the side of the base film facing the negative electrode plate includes a first polymer, and the first polymer includes polyethylene. A weight-average molecular weight of the first polymer is 600000 to 1500000, and preferably, the weight-average molecular weight of the first polymer is 600000 to 1000000. For example, the weight-average molecular weight of the first polymer may be 600000, 700000, 800000, 900000, 1000000, 1100000, 1200000, 1300000, 1400000, or 1500000, or falls within a range defined by any two of these values. A melting point of the first polymer is 134°C to 140°C, and preferably, the melting point of the first polymer is 134°C to 139°C. For example, the melting point of the first polymer may be 134°C, 135°C, 136°C, 137°C, 138°C, 139°C, or 140°C, or falls within a range defined by any two of these values. Due to the relatively high weight-average molecular weight and melting point of the first polymer, the side of the base film facing the negative electrode plate is controlled to include the first polymer, and the type, weight-average molecular weight, and melting point of the first polymer are controlled within the range in this application, so that the fiber of the separator is difficult to melt during the final formation of the separator. This allows for a larger pore size on the side of the base film facing the negative electrode plate and higher strength of the separator, thereby improving the safety performance of the secondary battery.

In an embodiment of this application, the side of the base film facing the negative electrode plate further includes thermal stable resin. The thermal stable resin includes at least one of polypropylene or poly(4-methylpentene), and a melting point of the thermal stable resin is 160°C to 260°C. For example, the melting point of the thermal stable resin may be 160°C, 165°C, 170°C, 175°C, 180°C, 185°C, 190°C, 195°C, 200°C, 205°C, 210°C, 215°C, 220°C, 225°C, 230°C, 235°C, 240°C, 245°C, 250°C, 255°C, or 260°C, or falls within a range defined by any two of these values. Due to the high melting point of the thermal stable resin, the side of the base film facing the negative electrode plate is controlled to further include the thermal stable resin, and the type and melting point of the thermal stable resin are controlled within the range in this application, so that the high-temperature stability of the separator can be enhanced.

In an embodiment of this application, the side of the base film facing the negative electrode plate further includes thermal stable resin, the thermal stable resin includes a cyclic olefin copolymer (COC), and a glass transition temperature of the cyclic olefin copolymer is 80°C to 160°C. For example, the glass transition temperature of the cyclic olefin copolymer may be 80°C, 90°C, 100°C, 110°C, 120°C, 130°C, 140°C, 150°C, or 160°C, or falls within a range defined by any two of these values. The side of the base film facing the negative electrode plate is controlled to further include the thermal stable resin, and the type and glass transition temperature of the thermal stable resin are controlled within the range in this application, so that the high-temperature stability of the separator can be enhanced.

In an embodiment of this application, the side of the base film facing the positive electrode plate includes a second polymer, and the second polymer includes polyethylene. A weight-average molecular weight of the second polymer is 200000 to 600000, and preferably, the weight-average molecular weight of the second polymer is 200000 to 500000. For example, the weight-average molecular weight of the second polymer may be 200000, 220000, 240000, 260000, 280000, 300000, 320000, 340000, 360000, 380000, 400000, 420000, 440000, 460000, 480000, 500000, 520000, 540000, 560000, 580000, or 600000, or falls within a range defined by any two of these values. A melting point of the second polymer is 120°C to 134°C, and preferably, the melting point of the second polymer is 126°C to 132°C. For example, the melting point of the second polymer may be 120°C, 121°C, 122°C, 123°C, 124°C, 125°C, 126°C, 127°C, 128°C, 129°C, 130°C, 131°C, 132°C, 133°C, or 134°C, or falls within a range defined by any two of these values. Due to the relatively low weight-average molecular weight and melting point of the second polymer, the side of the base film facing the positive electrode plate is controlled to include the second polymer, and the type, weight-average molecular weight, and melting point of the second polymer are controlled within the range in this application, so that the fiber of the separator is easy to melt during the final formation of the separator. This allows for a smaller pore size on the side of the base film facing the positive electrode plate and a lower shutdown temperature and higher shutdown velocity of the separator, thereby improving the safety performance of the secondary battery.

In an embodiment of this application, a shutdown temperature of the base film is 120°C to 140°C.

In an embodiment of this application, a shutdown velocity of the base film is 8 kΩ/min to 60 kΩ/min.

In an embodiment of this application, a rupture temperature of the base film is 155°C to 210°C.

In an embodiment of this application, a ratio of a conductivity of the base film to a conductivity of the electrolyte is 0.05 to 0.6. For example, the ratio of the conductivity of the base film to the conductivity of the electrolyte may be 0.05, 0.06, 0.07, 0.08, 0.09, 0.1, 0.11, 0.13, 0.15, 0.17, 0.19, 0.2, 0.21, 0.23, 0.25, 0.27, 0.29, 0.3, 0.31, 0.33, 0.35, 0.37, 0.39, 0.4, 0.41, 0.43, 0.45, 0.47, 0.49, 0.5, 0.51, 0.53, 0.55, 0.57, 0.59, or 0.6, or falls within a range formed by any two of these values. The conductivity of the electrolyte is 7 ms/cm to 20 ms/cm. Preferably, the conductivity of the electrolyte is 7.5 ms/cm to 15 ms/cm. For example, the conductivity of the electrolyte may be 7 ms/cm, 7.5 ms/cm, 8 ms/cm, 9 ms/cm, 10 ms/cm, 11 ms/cm, 12 ms/cm, 13 ms/cm, 14 ms/cm, 15 ms/cm, 16 ms/cm, 17 ms/cm, 18 ms/cm, 19 ms/cm, or 20 ms/cm, or falls within a range defined by any two of these values. The ratio of the conductivity of the base film to the conductivity of the electrolyte and the conductivity of the electrolyte are controlled within the range in this application, so that the optimal match between the conductivity of the separator and the conductivity of the electrolyte can be achieved, improving the fast charging and discharging performance of the secondary battery, alleviating lithium precipitation, and further improving the cycling performance of the secondary battery.

In this application, the conductivity of the base film is 0.35 ms/cm to 12 ms/cm, and preferably, the conductivity of the base film is 0.35 ms/cm to 5.5 ms/cm.

In an embodiment of this application, a contact angle between the electrolyte and the base film is 5° to 60°. For example, the contact angle between the electrolyte and the base film may be 5°, 10°, 15°, 20°, 25°, 30°, 35°, 40°, 45°, 50°, 55°, or 60°, or falls within a range defined by any two of these values. Controlling the contact angle between the electrolyte and the base film within the range in this application is conducive to improving the wettability of the separator, thereby accelerating transmission of the electrolyte in a thickness direction of the separator, improving the fast charging and discharging performance of the secondary battery, and alleviating lithium precipitation.

In an embodiment of this application, the thickness of the base film is 2 $\mu$m to 15 $\mu$m. For example, the thickness of the base film may be 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, or 15 $\mu$m, or falls within a range defined by any two of these values. Controlling the thickness of the base film within the range in this application allows for moderate transmission paths of lithium ions in the separator, thereby allowing for better charging and discharging rate performance of the secondary battery and alleviating lithium precipitation.

In an embodiment of this application, a porosity of the base film is 30% to 60%. For example, the porosity of the base film may be 30%, 32%, 34%, 36%, 38%, 40%, 42%, 44%, 46%, 48%, 50%, 52%, 54%, 56%, 58%, or 60%, or falls within a range defined by any two of these values. Controlling the porosity of the base film within the range in this application allows for a small contact angle between the electrolyte and the base film, thereby improving the wettability of the separator.

In an embodiment of this application, a viscosity of the electrolyte is 3 mPa·s to 20 mPa·s. For example, the viscosity of the electrolyte nay be 3 mPa·s, 4 mPa·s, 5 mPa s, 6 mPa s, 7 mPa s, 8 mPa s, 9 mPa s, 10 mPa·s, 11 mPa s, 12 mPa s, 13 mPa s, 14 mPa s, 15 mPa s, 16 mPa s, 17 mPa s, 18 mPa s, 19 mPa s, or 20 mPa s, or falls within a range defined by any two of these values. Controlling the viscosity of the electrolyte within the range in this application can improve the transmission velocity of lithium ions and further improve the fast charging performance of the secondary battery.

A preparation method of the base film is not particularly limited in this application, provided that the objectives of this application can be achieved. For example, the preparation method of the base film may include but is not limited to the following steps: mixing paraffin oil with the second polymer at a certain ratio to prepare a second slurry and supplying the second slurry to a die head B in a double-layer die head of an extruder; mixing paraffin oil, the first polymer, and the thermal stable resin at a certain ratio to prepare a first slurry and supplying the first slurry to a die head A in the double-layer die head of the extruder; extruding the first slurry and the second slurry through the double-layer die head of the extruder, cooling and casting the second slurry and the first slurry on a casting roll to form a film (both slurries are fluids, are partially blended when melting, and form one film after casting); and performing stretching, extraction, drying, secondary stretching, and heat setting on the obtained film to obtain the required base film. A mass ratio of the paraffin oil to the second polymer may be (75 to 65):(25 to 35), and a mass ratio of the paraffin oil, the first polymer, and the thermal stable resin may be (70 to 82):(14 to 22):(4 to 10). A heat setting temperature is not particularly limited in this application, provided that the objectives of this application can be achieved. For example, the heat setting temperature may be 120°C to 133°C.

In this application, the pore size on the side of the base film facing the negative electrode plate can be controlled by controlling a first material-to-oil ratio. For example, when the first material-to-oil ratio is reduced, the pore size and pores on the side of the base film facing the negative electrode plate are increased. Alternatively, the pore size on the side of the base film facing the negative electrode plate can be controlled by controlling the heat setting temperature of the separator. For example, when the heat setting temperature of the separator is reduced, the pores and pore size on the side of the base film facing the negative electrode plate are increased. The mass of the paraffin oil is x1, the total mass of the first polymer and thermal stable resin is y1, and the first material-to-oil ratio is yl:xl.

In this application, the pore size on the side of the base film facing the positive electrode plate can be controlled by controlling a second material-to-oil ratio. For example, when the second material-to-oil ratio is increased, the pore size and pores on the side of the base film facing the positive electrode plate are reduced. Alternatively, the pore size on the side of the base film facing the positive electrode plate can be controlled by controlling the heat setting temperature of the separator. For example, when the heat setting temperature of the separator is increased, the pores and pore size on the side of the base film facing the positive electrode plate are reduced. The mass of the paraffin oil is x2, the mass of the second polymer is y2, and the second material-to-oil ratio is y2:x2.

A method for controlling the value of H1/(H1+H2)×100% is not particularly limited in this application, provided that the objectives of this application can be achieved. For example, the value of H1/(H1+H2)×100% can be controlled by controlling respective values of H1 and H2. For example, the value of H1 can be controlled by controlling an extrusion amount of the die head A, and the value of H2 can be controlled by controlling an extrusion amount of the die head B.

In this application, the weight-average molecular weight of the first polymer affects the melting point of the first polymer. For example, the melting point of the first polymer can be controlled by controlling the weight-average molecular weight of the first polymer.

In this application, the weight-average molecular weight of the second polymer affects the melting point of the second polymer. For example, the melting point of the second polymer can be controlled by controlling the weight-average molecular weight of the second polymer.

In this application, when the thermal stable resin is polypropylene or poly(4-methylpentene), the weight-average molecular weight of the thermal stable resin affects the melting point of the thermal stable resin. For example, the melting point of the thermal stable resin can be controlled by controlling the weight-average molecular weight of the thermal stable resin. The weight-average molecular weight of the thermal stable resin is not particularly limited in this application, provided that the objectives of this application can be achieved. For example, the weight-average molecular weight of the thermal stable resin may be 100000 to 650000, that is, 100K to 650K.

A preparation method of the cyclic olefin copolymer is not particularly limited in this application, provided that the objectives of this application can be achieved. For example, the preparation method of the cyclic olefin copolymer may include but is not limited to the following steps: mixing ethylene with norbornene well, adding a metallocene catalyst into a reactor, and obtaining the cyclic olefin copolymer through a polymerization reaction. A mass ratio of norbornene to ethylene may be (62 to 80):(38 to 20), or (65 to 80):(35 to 20). Based on the total mass of ethylene, norbornene, and the metallocene catalyst, an amount of the metallocene catalyst added may be 0.1% to 1%.

In this application, when the thermal stable resin is a cyclic olefin copolymer, the glass transition temperature of the cyclic olefin copolymer is controlled by controlling an amount of norbornene added. For example, a larger amount of norbornene added leads to a higher glass transition temperature of a cyclic olefin copolymer formed after polymerization reaction, while a smaller amount of norbornene added leads to a lower glass transition temperature of a cyclic olefin copolymer formed after polymerization reaction.

In this application, the separator may further include a surface treatment layer. Optionally, the surface treatment layer is provided on at least one surface of the base film, and the surface treatment layer may be a polymer layer or an inorganic substance layer, or a layer formed by a mixture of a polymer and an inorganic substance. One or two surface treatment layers may be provided. For example, the inorganic substance layer includes inorganic particles, a binder for separator, and a thickener. The inorganic particles are not particularly limited in this application, and may include, for example, at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder for separator is not particularly limited in this application, and may be, for example, at least one of polyacrylate, polyacrylic acid, methyl methacrylate, ethyl methacrylate, polyimide, polyamide, polyamideimide, polyvinylidene fluoride, polystyrene butadiene copolymer (styrene-butadiene rubber), sodium alginate, polyvinyl alcohol, polytetrafluoroethylene, polyacrylonitrile, sodium carboxymethyl cellulose, potassium carboxymethyl cellulose, sodium hydroxymethyl cellulose, or potassium hydroxymethyl cellulose. The thickener is not particularly limited in this application, and may be, for example, at least one of sodium carboxymethyl cellulose, potassium carboxymethyl cellulose, sodium hydroxymethyl cellulose, or potassium hydroxymethyl cellulose. A mass ratio of the inorganic particles, binder for separator, and thickener in the inorganic substance layer is not particularly limited in this application, which can be selected by persons skilled in the art according to actual needs, provided that the objectives of this application can be achieved. For example, the mass ratio of the inorganic particles, binder for separator, and thickener in the inorganic substance layer may be (89 to 97.8):(2 to 8):(0.2 to 3). The polymer layer includes a polymer and a binder for separator. A material of the polymer includes at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene). A mass ratio of the polymer and binder for separator in the polymer layer is not particularly limited in this application, which can be selected by persons skilled in the art according to actual needs, provided that the objectives of this application can be achieved. For example, the mass ratio of the polymer and binder for separator in the polymer layer may be (75 to 85):(25 to 15).

In this application, the electrolyte includes a lithium salt and a non-aqueous solvent. The lithium salt may include various lithium salts commonly used in the art, for example, at least one of $LiPF_6$, $LiBF_4$, $LiAsF_6$, $LiClOa$, $LiB(C_6H_5)_4$, $LiCH_3SO_3$, $LiCF_3SO_3$, $LiN(SO_2CF_3)_2$, $LiC(SO_2CF_3)_3$, $Li_2SiF_6$, lithium bis(oxalato)borate (LiBOB), or lithium difluoroborate. The non-aqueous solvent is not particularly limited in this application, provided that the objectives of this application can be achieved. For example, the non-aqueous solvent may include but is not limited to at least one of a carbonate compound, a carboxylate compound, an ether compound, or another organic solvent. The carbonate compound may include but is not limited to at least one of a linear carbonate compound, a cyclic carbonate compound, or a fluorocarbonate compound. The linear carbonate compound may include but is not limited to at least one of dimethyl carbonate (DMC), diethyl carbonate (DEC), dipropyl carbonate (DPC), methyl propyl carbonate (MPC), ethylene propyl carbonate (EPC), or methyl ethyl carbonate (MEC). The cyclic carbonate may include but is not limited to at least one of ethylene carbonate (EC), propylene carbonate (PC), butylene carbonate (BC), or vinyl ethylene carbonate (VEC). The fluorocarbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include but is not limited to at least one of methyl formate, methyl acetate, ethyl acetate, n-propyl acetate, tert-butyl acetate, methyl propionate, ethyl propionate, propyl propionate, $\gamma$-butyrolactone, decanolide, valerolactone, or caprolactone. The ether compound may include but is not limited to at least one of dibutyl ether, tetraethylene glycol dimethyl ether, diglyme, 1,2-dimethoxyethane, 1,2-diethoxyethane, 1-ethoxy-1-methoxyethane, 2-methyltetrahydrofuran, or tetrahydrofuran. The another organic solvent may include but is not limited to at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. The concentration of the lithium salt in the electrolyte is not particularly limited in this application, provided that the objectives of this application can be achieved. For example, the concentration of the lithium salt in the electrolyte may be 0.3 mol/L to 1.2 mol/L or 0.4 mol/L to 1.1 mol/L, with the rest being an organic solvent.

A method for controlling the ratio of the conductivity of the base film to the conductivity of the electrolyte is not particularly limited in this application, provided that the objectives of this application can be achieved. For example, the ratio of the conductivity of the base film to the conductivity of the electrolyte can be controlled by controlling the respective values of the conductivity of the base film and the conductivity of the electrolyte. For example, the conductivity of the base film can be controlled by controlling the pore sizes on the sides facing the positive and negative electrodes, the porosity of the base film, and the ratio of H1/(H1+H2). The conductivity of the electrolyte can be controlled by controlling the components of the electrolyte. For example, when the viscosity of the electrolyte remains unchanged, an increase in the concentration of the lithium salt in the electrolyte leads to an increase in the conductivity of the electrolyte, while a decrease in the concentration of the lithium salt in the electrolyte leads to a decrease in the conductivity of the electrolyte.

A method for controlling the contact angle between the electrolyte and the base film is not particularly limited in this application, provided that the objectives of this application can be achieved. For example, the contact angle between the electrolyte and the base film can be controlled by controlling the conductivity or viscosity of the electrolyte. For example, an increase in the viscosity of the electrolyte leads to an increase in the contact angle between the electrolyte and the base film, while a decrease in the viscosity of the electrolyte leads to a decrease in the contact angle between the electrolyte and the base film.

In this application, the positive electrode plate includes a positive electrode current collector and a positive electrode material layer disposed on at least one surface of the positive electrode current collector. The "positive electrode material layer disposed on at least one surface of the positive electrode current collector" means that the positive electrode material layer may be disposed on one surface of the positive electrode current collector in its thickness direction, or on two surfaces of the positive electrode current collector in its thickness direction. It should be noted that the "surface" herein may be an entire region of the positive electrode current collector, or may be a partial region of the positive electrode current collector. This is not particularly limited in this application, provided that the objectives of this application can be achieved. The positive electrode current collector is not particularly limited in this application, provided that the objectives of this application can be achieved. For example, the positive electrode current collector may include aluminum foil, aluminum alloy foil, a composite current collector (for example, an aluminum-carbon composite current collector), or the like. The positive electrode material layer includes a positive electrode active material, and the positive electrode active material is not particularly limited in this application, provided that the objectives of this application can be achieved. For example, the positive electrode active material may include at least one of lithium nickel cobalt manganate (for example, common NCM811, NCM622, NCM523, and NCM111), lithium nickel cobalt aluminate, lithium iron phosphate, lithium-rich manganese-based material, lithium cobalt oxide (LiCoO$_2$), lithium manganate oxide, lithium manganese iron phosphate, or lithium titanate. The positive electrode material layer further includes a conductive agent and a binder. Types of the conductive agent and the binder are not particularly limited in this application, provided that the objectives of this application can be achieved. For example, the binder may be at least one of polyacrylate, polyimide, polyamide, polyamideimide, polyvinylidene fluoride, polystyrene butadiene copolymer (styrene-butadiene rubber), sodium alginate, polyvinyl alcohol, polytetrafluoroethylene, polyacrylonitrile, sodium carboxymethyl cellulose, potassium carboxymethyl cellulose, sodium hydroxymethyl cellulose, or potassium hydroxymethyl cellulose. The conductive agent may be at least one of acetylene black, conductive carbon black (Super P), carbon nanotubes (CNTs), carbon fiber, flake graphite, Ketjen black, or graphene. A mass ratio of the positive electrode active material, conductive agent, and binder in the positive electrode material layer is not particularly limited in this application, which can be selected by persons skilled in the art according to actual needs, provided that the objectives of this application can be achieved. The thickness of the positive electrode current collector is not particularly limited in this application, provided that the objectives of this application can be achieved. For example, the thickness of the positive electrode current collector is 4 $\mu$m to 12 $\mu$m. The thickness of the positive electrode material layer is not particularly limited in this application, provided that the objectives of this application can be achieved. For example, the thickness of the positive electrode material layer is 30 $\mu$m to 120 $\mu$m. The thickness of

the positive electrode plate is not particularly limited in this application, provided that the objectives of this application can be achieved. For example, the thickness of the positive electrode plate is 50 µm to 250 µm.

In this application, the negative electrode plate includes a negative electrode current collector and a negative electrode material layer disposed on at least one surface of the negative electrode current collector. The "negative electrode material layer disposed on at least one surface of the negative electrode current collector" means that the negative electrode material layer may be disposed on one surface of the negative electrode current collector in its thickness direction, or on two surfaces of the negative electrode current collector in its thickness direction. It should be noted that the "surface" herein may be an entire region of the negative electrode current collector, or may be a partial region of the negative electrode current collector. This is not particularly limited in this application, provided that the objectives of this application can be achieved. The negative electrode current collector is not particularly limited in this application, provided that the objectives of this application can be achieved. For example, the negative electrode current collector may include copper foil, copper alloy foil, nickel foil, stainless steel foil, titanium foil, nickel foam, copper foam, a composite current collector, or the like. The negative electrode material layer in this application includes a negative electrode active material. The negative electrode active material in this application may include at least one of natural graphite, artificial graphite, mesocarbon microbeads (MCMB), hard carbon, soft carbon, silicon, silicon-carbon composite, SiOx (0.5<x<1.6), Li-Sn alloy, Li-Sn-O alloy, Sn, SnO, $SnO_2$, spinel-structure lithium titanate $Li_4Ti_5O_{12}$, Li-Al alloy, or lithium metal. The negative electrode material layer in this application further includes a binder, a conductive agent, or a thickener. Types of the binder and the conductive agent are not particularly limited in this application, provided that the objectives of this application can be achieved. For example, the binder may include but is not limited to at least one of the foregoing binders. The conductive agent may include but is not limited to the foregoing conductive agents. A type of the thickener is not particularly limited in this application, provided that the objectives of this application can be achieved. For example, the thickener may include but is not limited to sodium carboxymethyl cellulose. The thickness of the negative electrode current collector is not particularly limited in this application, provided that the objectives of this application can be achieved. For example, the thickness of the negative electrode current collector is 4 µm to 10 µm. The thickness of the negative electrode material layer is not particularly limited in this application, provided that the objectives of this application can be achieved. For example, the thickness of the negative electrode material layer is 30 µm to 120 µm. The thickness of the negative electrode plate is not particularly limited in this application, provided that the objectives of this application can be achieved. For example, the thickness of the negative electrode plate is 50 µm to 250 µm.

The secondary battery in this application further includes a packaging bag for accommodating the positive electrode plate, the separator, the negative electrode plate, the electrolyte, and other known components of the secondary battery in the art. The other components are not limited in this application. The packaging bag is not particularly limited in this application and may be any well-known packaging bag in the art, provided that the objectives of this application can be achieved.

The secondary battery in this application is not particularly limited and may include any apparatus in which electrochemical reactions take place. In some embodiments, the secondary battery may include but is not limited to a lithium metal secondary battery, a lithium-ion secondary battery (lithium-ion battery), a lithium polymer secondary battery, or a lithium-ion polymer secondary battery.

A preparation process of the secondary battery in this application is well known to persons skilled in the art and is not particularly limited in this application. For example, the preparation process may include but is not limited to the following steps: The positive electrode plate, the separator, and the negative electrode plate are sequentially stacked, the resulting stack is subjected to operations such as winding and folding as required to obtain an electrode assembly of a wound structure, the electrode assembly is put into a packaging bag, an electrolyte is injected into the packaging bag, and then the packaging bag is sealed to obtain a secondary battery; alternatively, the positive electrode, the separator, and the negative electrode are sequentially stacked, four corners of the entire stacked structure are fixed with tapes to obtain an electrode assembly of a stacked structure, the electrode assembly is put into a packaging bag, an electrolyte is injected into the packaging bag, and then the packaging bag is sealed to obtain the secondary battery. In addition, if necessary, an overcurrent prevention element, a guide plate, and the like may be placed in the packaging bag as required, so as to prevent pressure increase, overcharge, and over-discharge in the secondary battery.

A second aspect of this application provides an electronic apparatus including the secondary battery according to any one of the foregoing embodiments. Therefore, the electronic apparatus provided in this application has good use performance.

The electronic apparatus in this application is not particularly limited and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

## Examples

The following describes some embodiments of this application more specifically by using examples and comparative examples. Various tests and evaluations are performed in the following methods. In addition, unless otherwise specified, "part" and "%" are based on mass.

Test methods and devices:

Separator pore size test:

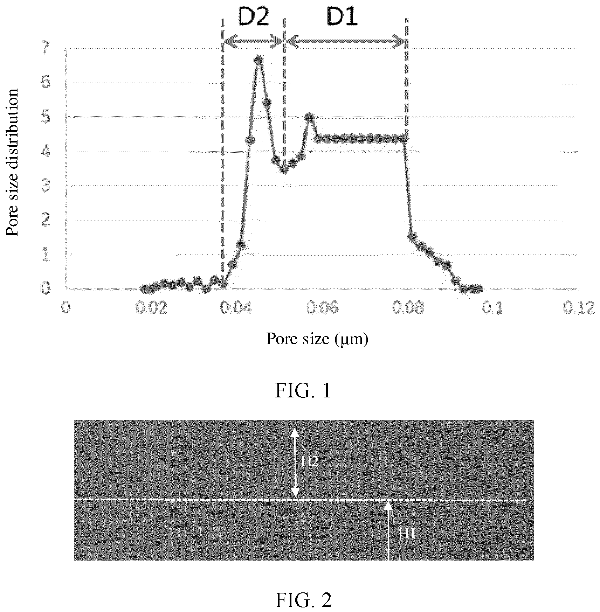

A pore size distribution curve of the separator was obtained using a porometer (model: PMI Porometer). For example, in FIG. 1, in the pore size distribution curve, a range from a pore size obtained when the pore size had a first sharp increase to a pore size when the pore size had a second sharp increase represented the pore size D2 on the side of the base film facing the positive electrode plate. In the pore size distribution curve, a range from the pore size obtained when the pore size had the second sharp increase to a pore size obtained when the pore size had a second decrease and tended to be stable represented the pore size D1 on the side of the base film facing the negative electrode plate.

Test for thickness of region with large pore size of separator and thickness of region with small pore size of separator:

A 1 cm×1 cm sample of the separator undergone ion polishing in the thickness direction of the separator, and a cross-section was scanned using a scanning electron microscope (SEM). As shown in FIG. 2, the thickness of the region with the large pore size was observed, measured, and denoted as H1; and the thickness of the region with the small pore size was observed, measured, and denoted as H2.

Weight-average molecular weight test:

The weight-average molecular weight of the sample was determined using gel permeation chromatography, where 1,2,4-trichlorobenzene served as a mobile phase, a flow velocity was 1 mL/min, a sample concentration was 2.0 mg/mL, and a sample injection volume during test was 200 μL.

Melting point test:

The melting point was tested using a differential scanning calorimeter (DSC). An aluminum crucible was used for the test, where the weight of the sample was 10 mg, a test temperature range was from room temperature to 400°C, and a temperature rise velocity was 10°C/min.

Glass transition temperature test:

The glass transition temperature was tested using a differential scanning calorimeter (DSC). An aluminum crucible was used for the test, where the weight of the sample was 10 mg, a test temperature range was from room temperature to 400°C, and a temperature rise velocity was 10°C/min.

Separator conductivity test:

(1) Preparation of separator: The separator under test was cut into a same size (45.3 mm×33.7 mm), dried in an environment at 60°C for 4 h, and then transferred to a glove box for later use.

(2) Preparation of symmetrical lithium-ion battery packaging bag: A blank symmetrical lithium-ion battery packaging bag without a separator was assembled by using copper foil against copper foil. Before used, the packaging bag needed to be dried in an environment at 60°C for 4 h, and then transferred to the glove box for later use.

(3) Assembly of symmetrical lithium-ion battery: A symmetrical lithium-ion battery with a negative electrode plate against a negative electrode plate was assembled in the symmetrical lithium-ion battery packaging bag. In the glove box, different separator layers (1 layer, 2 layers, 3 layers, 4 layers, and 5 layers) were assembled in situ between the symmetrical electrodes to form symmetrical lithium-ion batteries (5 parallel samples were assembled for the symmetrical lithium-ion batteries with the same layer number). Sides of the packaging bag were sealed using a simple sealing machine, an electrolyte (300 μL) was injected using a pipette, and then bottom sealing was performed.

(4) Placement of symmetrical lithium-ion battery into fixture: The assembled symmetrical lithium-ion battery was placed into a fixture, and then placed in the glove box and left standing for 12 h such that the electrolyte fully infiltrates the separator.

(5) Electrochemical impedance spectroscopy (EIS) test: Before the EIS test, symmetrical lithium-ion batteries with different separator layers were placed in a high-low temperature chamber and kept at a constant temperature of 25°C for half an hour, and EIS was tested at a given temperature. During the EIS test, the frequency was set to 1 kHz, and a disturbance voltage was set to 5 mV. The conductivity S of the separator was calculated based on the test results.

(6) Calculation of conductivity S of separator:

Resistance values obtained from the symmetrical lithium-ion batteries with different separator layers were used as vertical coordinates, and the layer numbers n were used as horizontal coordinates to obtain a scatter plot. Then, linear fitting was performed. The slope represented the resistance value of the separator. The conductivity S of the separator was calculated according to the following formula:

Conductivity S of separator=thickness of separator/(resistance value of separator×effective area for ion transmission in separator during impedance test),

where the effective area for ion transmission in the separator during impedance test was 153.86 mm$^2$. The negative electrode plate and electrolyte used during EIS test were the same as the negative electrode plate and electrolyte used in Example 1-1.

Electrolyte conductivity test:

The conductivity of the electrolyte was tested using a conductivity meter.

Two parallel platinum electrodes having a cross-sectional area A and spaced by a distance L were put into the electrolyte under test, and resistance R between the two platinum electrodes was tested. The conductivity D of the electrolyte was calculated according to the following formula:

$$D=L/(R\times A),$$

where L was 1 cm, and A was 0.25 cm$^2$.

Test for contact angle between electrolyte and separator:

The contact angle between the electrolyte and the separator was tested using a sessile drop method. First, the separator was laid flat on a substrate (the separator was kept flat). Then, 0.02 mL of electrolyte was dropwise added onto the separator sample. An image of the electrolyte droplet was captured by a high-resolution camera, and the angle was automatically measured through software by using an optical contact angle meter. A test result was the contact angle between the electrolyte and the separator.

High-rate charge and discharge capacity test:

First, the lithium-ion battery was left standing in an environment at 25°C for 30 min, and discharged to 3.0 V at a constant current of 0.5C. Then, the lithium-ion battery was charged to 4.45 V at a constant current of 2C, charged to 0.02C at a constant voltage of 4.45 V, and then discharged to 3.0 V at a constant current of 0.5C. A discharge capacity of the lithium-ion battery at 25°C was recorded as C3. At 25°C, the lithium-ion battery was charged to 4.45 V at a constant current of 2C and then charged to 0.02C at a constant voltage of 4.45 V, to obtain a fully charged lithium-ion battery.

The fully charged lithium-ion battery was discharged to 3.0 V at a constant current of 3.0C, and a discharge capacity of the lithium-ion battery at 3.0C was recorded as C4.

$$\text{Discharge capacity retention rate at 3.0C=C4/C3}\times100\%.$$

Cycling performance test:

The lithium-ion battery was left standing in an environment at 25°C for 60 min, then charged to 4.45 V at a constant current of 2C, and then charged to 0.02C at a constant voltage of 4.45 V. Then, the lithium-ion battery was discharged to 3.0 V at a constant current of 0.5C. This process was one charge and discharge cycle, and a first-cycle discharge capacity was recorded. 500 charge and discharge cycles were performed in the foregoing steps, and a discharge capacity after 500 cycles was recorded.

Capacity retention rate of the 500th cycle at 25°C=(discharge capacity of the 500th cycle/first-cycle discharge capacity)×100%.

Lithium precipitation degree test:

At 12°C, the lithium-ion battery was charged to 4.45 V at 3C, then charged to 0.05C at a constant voltage of 4.45 V, and then charged to 3.0 V at a constant current of 1.0C. This process was one cycle, and 10 cycles were performed. Then, the lithium-ion battery in a fully charged state was disassembled to observe the lithium precipitation degree of the negative electrode plate. When no lithium precipitation was found or the lithium precipitation area was not less than 2%, this case was considered as no lithium precipitation. When the lithium precipitation area was 2% to 10%, this case was considered as slight lithium precipitation. When the lithium precipitation area was 10% to 50%, this case was considered as moderate lithium precipitation. When the lithium precipitation area was greater than 50%, this case was considered as severe lithium precipitation. The percentage of the lithium precipitation area was calculated based on the area of a single-sided negative electrode plate.

Hot box test:

First, the lithium-ion battery was pretreated, where the pretreatment process was as follows: At a test temperature of 25°C±5°C, the lithium-ion battery was left standing for 5 min, then charged to 4.45 V at a constant current of 0.5C, and then charged to 0.02C at a constant voltage of 4.45 V, and left standing for 60 min. Then, hot box test was performed. Before test, the appearance of the lithium-ion battery was checked and photographed, a temperature sensing line was pasted, a sample was vertically placed in a box, heated to a test temperature (130°C) at a temperature rise speed of 5°C±2°C/min, and kept at the temperature for 60 min. Then, voltage and internal resistance were measured. If the lithium-ion battery had no fire or explosion, the lithium-ion battery passed the hot box test. Each embodiment and comparative embodiment has ten parallel samples for testing.

**Example 1-1**

<Preparation of separator>

The second polymer polyethylene and the paraffin oil were mixed at a mass ratio of 31:69 to prepare a second slurry with a solid content of 31wt%, and the secondary slurry was supplied to a die head B in a double-layer die head of an extruder. The first polymer polyethylene, the thermal stable resin polypropylene, and the paraffin oil were mixed at a mass ratio of 22:6:72 to prepare a first slurry with a solid content of 28wt%, and the first slurry was supplied to a die head A in the double-layer die head of the extruder. The first slurry and the second slurry were extruded through the double-layer die head of the extruder, cooled and cast on a casting roll to form a film (both slurries were fluids, were partially blended when melting, and formed one film after casting). The obtained film was longitudinally and transversely stretched to 8 times its length. The resulting film was extracted through dichloromethane at 25°C for 0.5 h and then dried to obtain a polyolefin porous substrate. Then, the polyolefin porous substrate undergone secondary stretching to 2 times its length, followed by heat setting at 130°C and rolling, to obtain a base film which was the required separator. A first material-to-oil ratio y1:x1 was 28:72, and a second material-to-oil ratio y2:x2 was 31:69. The pore size D1 on the side of the base film facing the negative electrode plate, the pore size D2 on the side of the base film facing the positive electrode plate, the type of first polymer, the weight-average molecular weight M1 of the first polymer, the melting point T1 of the first polymer, the type of second polymer, the weight-average molecular weight M2 of the second polymer, the melting point T2 of the second polymer, the thickness H1 of the region of the side of the base film facing the negative electrode plate, the thickness H2 of the region of the side of the base film facing the positive electrode plate, and the value of $H1/(H1+H2)\times100\%$ were as shown in Table 1.

<Preparation of positive electrode plate>

Lithium cobalt oxide, conductive carbon, and polyvinylidene fluoride (PVDF) were mixed at a weight ratio of 96:2:2, and then N-methylpyrrolidone (NMP) was added as a solvent, to prepare a slurry with a solid content of 65wt%. Then, the slurry was stirred well in vacuum to obtain a positive electrode slurry. The positive electrode slurry was uniformly applied on a surface of a positive electrode current collector aluminum foil with a thickness of 10 $\mu$m, and drying was performed at 120°C, to obtain a positive electrode plate having a positive electrode material layer applied on one surface with a coating thickness of 100 $\mu$m. Then, the foregoing steps were repeated on another surface of the aluminum foil to obtain a positive electrode plate with positive electrode material layers applied on two surfaces. Then, after cold pressing, cutting, and tab welding, vacuum drying was performed at 85°C for 4 h, and a positive electrode plate with a size of 74 mm×867 mm was obtained for later use.

<Preparation of negative electrode plate>

Artificial graphite, conductive carbon, styrene-butadiene rubber (SBR), and sodium carboxymethyl cellulose (CMC-Na) were mixed at a weight ratio of 95:1:3:1, and deionized water was added as a solvent, to prepare a slurry with a solid content of 50wt%. The slurry was mixed well in a vacuum mixer to obtain a negative electrode slurry. The negative electrode slurry was uniformly applied on a surface of a negative electrode current collector copper foil with a thickness of 6 $\mu$m, and drying was performed at 85°C, to obtain a negative electrode plate having a negative electrode material layer applied on one surface with a coating thickness of 100 $\mu$m. Then, the foregoing steps were repeated on another surface of the copper foil to obtain a negative electrode plate with negative electrode material layers applied on two surfaces. Then, after cold pressing, cutting, and tab welding, vacuum drying was performed at 120°C for 12 h, and a negative electrode plate with a size of 78 mm$\times$875 mm was obtained for later use.

<Preparation of electrolyte>

In a glove box under argon atmosphere with a moisture content less than 10 ppm, ethylene carbonate (EC), propylene carbonate (PC), diethyl carbonate (DEC), and dimethyl carbonate (DMC) were mixed well at a mass ratio of EC:PC:DEC:DMC=1:1:1:1 to obtain an organic solvent. Then, $LiPF_6$ was dissolved in the organic solvent, and the resulting mixture was mixed well to obtain an electrolyte, with a concentration of $LiPF_6$ being 0.55 mol/L and the rest being the organic solvent.

<Preparation of lithium-ion battery>

The positive electrode plate, the prepared separator, and the negative electrode plate were sequentially stacked so that the separator was located between the positive electrode plate and the negative electrode plate for separation. Then, the resulting stack was wound to obtain an electrode assembly. The electrode assembly was placed into an outer package foil and dehydrated at 80°C. Then, the prepared electrolyte was injected, and processes such as vacuum packaging, standing, formation, shaping, and capacity testing were performed to obtain a pouch lithium-ion battery.

**Examples 1-2 to 1-7**

These examples were the same as Example 1-1 except that in <preparation of separator>, the first material-to-oil ratio and the heat setting temperature were adjusted such that the pore size on the side of the base film facing the negative electrode plate was as shown in Table 1. When the first material-to-oil ratio changed, the total mass of the first polymer, thermal stable resin, and paraffin oil remained unchanged. The percentages of the first polymer and paraffin oil changed with the first material-to-oil ratio, and the percentage of the thermal stable resin remained unchanged.

**Examples 1-8 to 1-13**

These examples were the same as Example 1-1 except that in <preparation of separator>, the second material-to-oil ratio and the heat setting temperature were adjusted such that the pore size on the side of the base film facing the positive electrode plate was as shown in Table 1, and that the related preparation parameters were adjusted according to Table 1. When the second material-to-oil ratio changed, the total mass of the second polymer and paraffin oil remained unchanged.

**Examples 1-14 to 1-31**

These examples were the same as Example 1-1 except that the related preparation parameters were adjusted according to Table 1.

**Example 2-1**

This example was the same as Example 1-3 except that in <preparation of separator>, the related preparation parameters were adjusted according to Table 2. The type of the thermal stable resin, the melting point of the thermal stable resin, and the glass transition temperature of the thermal stable resin were as shown in Table 2.

**Examples 2-2 to 2-9**

These examples were the same as Example 2-1 except that in <preparation of separator>, the related preparation parameters were adjusted according to Table 2, and that when the type of the thermal stable resin remained unchanged, the weight-average molecular weight of the thermal stable resin was adjusted such that the melting point of the thermal stable resin was as shown in Table 2.

**Example 2-10**

This example was the same as Example 2-1 except that in <preparation of separator>, the thermal stable resin was prepared in the following method and the related preparation parameters were adjusted according to Table 2.
A preparation method of the thermal stable resin being a cyclic olefin copolymer were as follows:
Ethylene and norbornene were mixed well, a metallocene catalyst (rac-ethylene bisindenyl zirconium dichloride) was added into a reactor, and the cyclic olefin copolymer was obtained through a polymerization reaction. A mass ratio of norbornene to ethylene was 65:35, and the amount of the metallocene catalyst added was 0.5% of the total mass of all reactants.
A method for preparing the separator by adding the thermal stable resin was the same as that in Example 2-1.

**Examples 2-11 to 2-15**

These examples were the same as Example 2-10 except that in <preparation of separator>, the mass ratio of norbornene to ethylene was adjusted such that the glass transition temperature of the thermal stable resin was as shown in Table 2. When the mass ratio of norbornene to ethylene changed, the total mass of norbornene and ethylene and the mass of the metallocene catalyst remained unchanged.

**Examples 3-1 to 3-16**

These examples were the same as Example 1-3 except that the related preparation parameters were adjusted according to Table 3. When the concentration of the lithium salt changed, the percentage of the organic solvent remained unchanged, and the amount of the lithium salt added was adjusted to change the concentration of the lithium salt.

**Comparative examples 1 and 2**

These examples were the same as Example 1-1 except that in <preparation of separator>, the mass ratio of the paraffin oil to the first polymer was adjusted such that the pore size on the side of the base film facing the negative electrode plate was as shown in Table 1.

**Comparative examples 3 to 6**

These examples were the same as Example 1-1 except that the related preparation parameters were adjusted according to Table 1.
Preparation parameters and performance tests of the examples and comparative examples are shown in Tables 1 to 3.

**Table 1**

| | Type of first polymer | M1 | T1 (°C) | Type of second polymer | M2 | T2 (°C) | y1:x1 | y2:x2 | Heat setting temperature (°C) | D1 (nm) | D2 (nm) | H1 (μm) | H2 (μm) | H1/(H1+H2)×100% (%) | Lithium precipitation degree | Cycling capacity retention rate of the 500th cycle at 25°C (%) | Discharge capacity retention rate at 3.0C (%) | Hot box Performance |
|---|---|---|---|---|---|---|---|---|---|---|---|---|---|---|---|---|---|---|
| Example 1-1 | Polyethylene | 800K | 137 | Polyethylene | 400K | 130 | 28:72 | 31:69 | 130 | 70 | 45 | 3 | 2 | 60 | No lithium precipitation | 86.4 | 90.6 | 10/10 |
| Example 1-2 | Polyethylene | 800K | 137 | Polyethylene | 400K | 130 | 29:71 | 31:69 | 132 | 60 | 45 | 3 | 2 | 60 | No lithium precipitation | 86.1 | 90.1 | 10/10 |
| Example 1-3 | Polyethylene | 800K | 137 | Polyethylene | 400K | 130 | 27:73 | 31:69 | 129 | 80 | 45 | 3 | 2 | 60 | No lithium precipitation | 86.5 | 91.2 | 10/10 |
| Example 1-4 | Polyethylene | 800K | 137 | Polyethylene | 400K | 130 | 23:77 | 31:69 | 126 | 200 | 45 | 3 | 2 | 60 | No lithium precipitation | 87.6 | 92.0 | 10/10 |
| Example 1-5 | Polyethylene | 800K | 137 | Polyethylene | 400K | 130 | 22:78 | 31:69 | 125 | 300 | 45 | 3 | 2 | 60 | No lithium precipitation | 86.7 | 91.0 | 10/10 |
| Example 1-6 | Polyethylene | 800K | 137 | Polyethylene | 400K | 130 | 20:80 | 31:69 | 123 | 400 | 45 | 3 | 2 | 60 | No lithium precipitation | 86.6 | 90.8 | 9/10 |
| Example 1-7 | Polyethylene | 800K | 137 | Polyethylene | 400K | 130 | 18:82 | 31:69 | 120 | 500 | 45 | 3 | 2 | 60 | No lithium precipitation | 86.3 | 90.5 | 8/10 |
| Example 1-8 | Polyethylene | 800K | 137 | Polyethylene | 400K | 130 | 25:75 | 35:65 | 127 | 100 | 5 | 3 | 2 | 60 | No lithium precipitation | 86.9 | 91.5 | 9/10 |
| Example 1-9 | Polyethylene | 800K | 137 | Polyethylene | 400K | 130 | 25:75 | 34:66 | 126 | 100 | 10 | 3 | 2 | 60 | No lithium precipitation | 87.1 | 91.6 | 9/10 |
| Example 1-10 | Polyethylene | 800K | 137 | Polyethylene | 400K | 130 | 25:75 | 33:67 | 125 | 100 | 15 | 3 | 2 | 60 | No lithium precipitation | 87.2 | 92.0 | 10/10 |
| Example 1-11 | Polyethylene | 800K | 137 | Polyethylene | 400K | 130 | 25:75 | 32:68 | 124 | 100 | 30 | 3 | 2 | 60 | No lithium precipitation | 87.8 | 92.8 | 10/10 |
| Example 1-12 | Polyethylene | 800K | 137 | Polyethylene | 400K | 130 | 25:75 | 29:71 | 123 | 100 | 50 | 3 | 2 | 60 | No lithium precipitation | 87.6 | 92.3 | 10/10 |
| Example 1-13 | Polyethylene | 800K | 137 | Polyethylene | 400K | 130 | 25:75 | 27:73 | 121 | 100 | 55 | 3 | 2 | 60 | No lithium precipitation | 87.5 | 92.1 | 10/10 |

| | Type of first polymer | M1 | T1 (°C) | Type of second polymer | M2 | T2 (°C) | y1:x1 | y2:x2 | Heat setting temperature (°C) | D1 (nm) | D2 (nm) | H1 (μm) | H2 (μm) | H1/(H1+- H2)×100% (%) | Lithium precipitation degree | Cycling capacity retention rate of the 500th cycle at 25°C (%) | Discharge capacity retention rate at 3.0C (%) | Hot box Perfo rman ce |
|---|---|---|---|---|---|---|---|---|---|---|---|---|---|---|---|---|---|---|
| Example 1-14 | Polyethylene | 800K | 137 | Polyethylene | 400K | 130 | 25:75 | 31:69 | 128 | 100 | 45 | 2.5 | 2.5 | 50 | No lithium precipitation | 86.0 | 90.4 | 10/10 |
| Example 1-15 | Polyethylene | 800K | 137 | Polyethylene | 400K | 130 | 25:75 | 31:69 | 128 | 100 | 45 | 2.75 | 2.25 | 55 | No lithium precipitation | 86.5 | 91.0 | 10/10 |
| Example 1-16 | Polyethylene | 800K | 137 | Polyethylene | 400K | 130 | 25:75 | 31:69 | 128 | 100 | 45 | 3.5 | 1.5 | 70 | No lithium precipitation | 86.9 | 91.4 | 10/10 |
| Example 1-17 | Polyethylene | 800K | 137 | Polyethylene | 400K | 130 | 25:75 | 31:69 | 128 | 100 | 45 | 4 | 1 | 80 | No lithium precipitation | 87.0 | 92.4 | 10/10 |
| Example 1-18 | Polyethylene | 800K | 137 | Polyethylene | 400K | 130 | 25:75 | 31:69 | 128 | 100 | 45 | 2 | 3 | 40 | Slight lithium precipitation | 82.2 | 82.1 | 8/10 |
| Example 1-19 | Polyethylene | 800K | 137 | Polyethylene | 400K | 130 | 25:75 | 31:69 | 128 | 100 | 45 | 4.5 | 0.5 | 90 | No lithium precipitation | 83.5 | 83.8 | 8110 |
| Example 1-20 | Polyethylene | 600K | 134 | Polyethylene | 400K | 130 | 25:75 | 31:69 | 128 | 100 | 45 | 3 | 2 | 60 | No lithium precipitation | 86.3 | 91.1 | 10/10 |
| Example 1-21 | Polyethylene | 1000 K | 139 | Polyethylene | 400K | 130 | 25:75 | 31:69 | 128 | 100 | 45 | 3 | 2 | 60 | No lithium precipitation | 86.6 | 91.3 | 10/10 |
| Example 1-22 | Polyethylene | 1250 K | 139. 5 | Polyethylene | 400K | 130 | 25:75 | 31:69 | 130 | 100 | 45 | 3 | 2 | 60 | No lithium precipitation | 86.0 | 90.6 | 10/10 |
| Example 1-23 | Polyethylene | 1500 K | 140 | Polyethylene | 400K | 130 | 25:75 | 31:69 | 131 | 100 | 45 | 3 | 2 | 60 | No lithium precipitation | 85.9 | 90.7 | 9/10 |
| Example 1-24 | Polyethylene | 400K | 130 | Polyethylene | 400K | 130 | 25:75 | 31:69 | 125 | 100 | 45 | 3 | 2 | 60 | No lithium precipitation | 84.1 | 84.8 | 7/10 |
| Example 1-25 | Polyethylene | 1600 K | 142 | Polyethylene | 400K | 130 | 25:75 | 31:69 | 133 | 100 | 45 | 3 | 2 | 60 | No lithium precipitation | 84.5 | 83.5 | 8/10 |
| Example 1-26 | Polyethylene | 800K | 137 | Polyethylene | 200K | 120 | 25:75 | 31:69 | 126 | 100 | 45 | 3 | 2 | 60 | No lithium precipitation | 86.8 | 90.8 | 10/10 |

EP 4 510 269 A1

| | Type of first polymer | M1 | T1 (°C) | Type of second polymer | M2 | T2 (°C) | y1:x1 | y2:x2 | Heat setting temperature (°C) | D1 (nm) | D2 (nm) | H1 (μm) | H2 (μm) | H1/(H1+H2)×100% (%) | Lithium precipitation degree | Cycling capacity retention rate of the 500th cycle at 25°C (%) | Discharge capacity retention rate at 3.0C (%) | Hot box Performance |
|---|---|---|---|---|---|---|---|---|---|---|---|---|---|---|---|---|---|---|
| Example 1-27 | Polyethylene | 800K | 137 | Polyethylene | 300K | 126 | 25:75 | 31:69 | 127 | 100 | 45 | 3 | 2 | 60 | No lithium precipitation | 86.9 | 91.0 | 10/10 |
| Example 1-28 | Polyethylene | 800K | 137 | Polyethylene | 500K | 132 | 25:75 | 31:69 | 129 | 100 | 45 | 3 | 2 | 60 | No lithium precipitation | 86.7 | 90.9 | 10/10 |
| Example 1-28 | Polyethylene | 800K | 137 | Polyethylene | 550K | 133 | 25:75 | 31:69 | 130 | 100 | 45 | 3 | 2 | 60 | No lithium precipitation | 86.1 | 90.2 | 10/10 |
| Example 1-29 | Polyethylene | 800K | 137 | Polyethylene | 600K | 134 | 25:75 | 31:69 | 131 | 100 | 45 | 3 | 2 | 60 | No lithium precipitation | 86.0 | 90.0 | 9/10 |
| Example 1-30 | Polyethylene | 800K | 137 | Polyethylene | 100K | 115 | 25:75 | 31:69 | 120 | 100 | 45 | 3 | 2 | 60 | No lithium precipitation | 84.2 | 85.1 | 7/10 |
| Example 1-31 | Polyethylene | 800K | 137 | Polyethylene | 700K | 136 | 25:75 | 31:69 | 132 | 100 | 45 | 3 | 2 | 60 | No lithium precipitation | 83.7 | 85.7 | 8/10 |
| Comparative example 1 | Polyethylene | 800K | 137 | Polyethylene | 400K | 130 | 33:67 | 31:69 | 134 | 50 | 45 | 3 | 2 | 60 | Severe lithium precipitation | 71.2 | 70.1 | 2/10 |
| Comparative example 2 | Polyethylene | 800K | 137 | Polyethylene | 400K | 130 | 15:85 | 31:69 | 117 | 600 | 45 | 3 | 2 | 60 | Moderate lithium precipitation | 74.5 | 72.7 | 0/10 |
| Comparative example 3 | Polyethylene | 800K | 137 | Polyethylene | 400K | 130 | 25:75 | 40:60 | 135 | 100 | 3 | 3 | 2 | 60 | Moderate lithium precipitation | 75.3 | 71.9 | 2/10 |
| Comparative example 4 | Polyethylene | 800K | 137 | Polyethylene | 400K | 130 | 25:75 | 22:78 | 126 | 100 | 65 | 3 | 2 | 60 | Severe lithium precipitation | 70.4 | 69.7 | 1/10 |
| Comparative example 5 | Polyethylene | 400K | 130 | Polyethylene | 800K | 137 | 35:65 | 20:80 | 123 | 40 | 100 | 3 | 2 | 60 | Severe lithium precipitation | 63.6 | 62.4 | 1/10 |

(continued)

| Type of first polymer | M1 | T1 (°C) | Type of second polymer | M2 | T2 (°C) | y1:x1 | y2:x2 | Heat setting temperature (°C) | D1 (nm) | D2 (nm) | H1 (μm) | H2 (μm) | H1/(H1+H2)×100% (%) | Lithium precipitation degree | Cycling capacity retention rate of the 500th cycle at 25°C (%) | Discharge capacity retention rate at 3.0C (%) | Hot box Performance |
|---|---|---|---|---|---|---|---|---|---|---|---|---|---|---|---|---|---|
| Comparative example 6 | | | | | | | | | | | | | | | | | |
| Polyethylene | 800K | 137 | Polyethylene | 400K | 130 | 25:75 | 20:80 | 122 | 100 | 100 | 3 | 2 | 60 | Moderate lithium precipitation | 65.7 | 67.8 | 1/10 |

Notes: (1) For example, in Example 1-20, the weight-average molecular weight of the first polymer in table 1 is "600K", that is, the weight-average molecular weight of the first polymer is 600000. This interpretation is applicable to other examples and comparative examples. (2). For example, in Example 1-6, "9/10" in the hot box test in Table 1 indicates that 10 lithium-ion batteries are subjected to hot box test. If 9 lithium-ion batteries have no fire or explosion, these lithium-ion batteries pass the hot box test. This interpretation is applicable to other examples and comparative examples.

It can be seen from Examples 1-1 to 1-31 and Comparative Examples 1 to 6 that when the separator in the lithium-ion battery includes a base film, the pore size distribution of the base film is a bimodal distribution, the pore size on the side of the base film facing the negative electrode plate is larger than the pore size on the side of the base film facing the positive electrode plate, and the pore size on the side of the base film facing the negative electrode plate and the pore size on the side of the base film facing the positive electrode plate are within the range in this application, the lithium-ion battery exhibits a lower lithium precipitation degree, a higher cycling capacity retention rate of the 500th cycle at 25°C, a higher discharge capacity retention rate at 3.0C, and a higher hot box pass rate, thereby indicating that the lithium-ion battery has better fast charging performance and alleviated lithium precipitation.

The ratio of the thickness H1 of the region of the side of the base film facing the negative electrode plate to the total thickness (H1+H2) of two sides of the base film facing the electrode plates usually affects the charging and discharging rate performance, lithium precipitation, and cycling performance of the lithium-ion battery. It can be seen from Examples 1-14 to 1-19 that when the value of H1/(H1+H2)×100% is within the range in this application, the lithium-ion battery exhibits a lower lithium precipitation degree, a higher cycling capacity retention rate of the 500th cycle at 25°C, and a higher discharge capacity retention rate at 3.0C, thereby indicating that the lithium-ion battery has better charging and discharging rate performance and cycling performance and further alleviated lithium precipitation.

The type of the first polymer usually affects the fast charging performance and lithium precipitation of the lithium-ion battery. It can be seen from Examples 1-1 to 1-31 that when the type of the first polymer is within the range in this application, the lithium-ion battery exhibits a lower lithium precipitation degree and a higher discharge capacity retention rate at 3.0C, thereby indicating that the lithium-ion battery has better fast charging performance and alleviated lithium precipitation.

The weight-average molecular weight and melting point of the first polymer usually affect the safety performance of the lithium-ion battery. It can be seen from Examples 1-20 to 1-25 that when the weight-average molecular weight and melting point of the first polymer are within the range in this application, the lithium-ion battery exhibits a higher hot box pass rate, thereby indicating that the lithium-ion battery has better safety performance.

The weight-average molecular weight and melting point of the second polymer usually affect the safety performance of the lithium-ion battery. It can be seen from Examples 1-26 to 1-31 that when the weight-average molecular weight and melting point of the second polymer are within the range in this application, the lithium-ion battery exhibits a higher hot box pass rate, thereby indicating that the lithium-ion battery has better safety performance.

It can be seen from FIG. 1 that the pore size distribution of the base film of the separator in Example 1-1 of this application is a bimodal distribution, the pore size on the side of the base film facing the negative electrode plate is larger than the pore size on the side of the base film facing the positive electrode plate, the pore size on the side of the base film facing the negative electrode plate is 60 nm to 80 nm, and the pore size on the side of the base film facing the positive electrode plate is 40 nm to 50 nm.

**Table 2**

| Example | Type of thermal stable resin | Weight-average molecular weight of thermal stable resin | Melting point of thermal stable resin (°C) | Mass ratio of norbornene to ethylene | Glass transition temperature of thermal stable resin (°C) | Lithium precipitation degree | Cycling capacity retention rate of the 500th cycle at 25°C (%) | Discharge capacity retention rate at 3.0C (%) | Hot box Performance |
|---|---|---|---|---|---|---|---|---|---|
| Example 1-3 | Polypropylene | 470K | 165 | / | / | No lithium precipitation | 86.5 | 91.2 | 10/10 |
| Example 2-1 | Polypropylene | 530K | 170 | / | / | No lithium precipitation | 86.7 | 91.0 | 8/10 |
| Example 2-2 | Polypropylene | 310K | 160 | / | / | No lithium precipitation | 86.8 | 91.5 | 9/10 |
| Example 2-3 | Polypropylene | 650K | 175 | / | / | No lithium precipitation | 86.6 | 91.1 | 10/10 |
| Example 2-4 | Poly(4-methylpentene) | 170K | 200 | / | / | No lithium precipitation | 86.4 | 90.9 | 10/10 |
| Example 2-5 | Poly(4-methylpentene) | 210K | 220 | / | / | No lithium precipitation | 87.0 | 91.6 | 10/10 |
| Example 2-6 | Poly(4-methylpentene) | 300K | 240 | / | / | No lithium precipitation | 86.2 | 91.3 | 10/10 |
| Example 2-7 | Poly(4-methylpentene) | 450K | 260 | / | / | No lithium precipitation | 86.1 | 91.5 | 10/10 |
| Example 2-8 | Polyethylene | 250K | 130 | / | / | No lithium precipitation | 79.8 | 85.2 | 2/10 |
| Example 2-9 | Polyphenylene sulfide | 50K | 280 | / | / | No lithium precipitation | 79.1 | 86.7 | 0/10 |
| Example 2-10 | Cyclic olefin copolymer | / | / | 65:35 | 80 | No lithium precipitation | 87.6 | 90.8 | 9/10 |
| Example 2-11 | Cyclic olefin copolymer | / | / | 67:33 | 90 | No lithium precipitation | 87.3 | 90.9 | 8/10 |
| Example 2-12 | Cyclic olefin copolymer | / | / | 69:31 | 100 | No lithium precipitation | 87.2 | 91.6 | 10/10 |

| | Type of thermal stable resin | Weight-average molecular weight of thermal stable resin | Melting point of thermal stable resin (°C) | Mass ratio of norbornene to ethylene | Glass transition temperature of thermal stable resin (°C) | Lithium precipitation degree | Cycling capacity retention rate of the 500th cycle at 25°C (%) | Discharge capacity retention rate at 3.0C (%) | Hot box Performance |
|---|---|---|---|---|---|---|---|---|---|
| Example 2-13 | Cyclic olefin copolymer | / | / | 74:26 | 120 | No lithium precipitation | 87.2 | 91.3 | 10/10 |
| Example 2-14 | Cyclic olefin copolymer | / | / | 80:20 | 160 | No lithium precipitation | 86.9 | 91.4 | 10/10 |
| Example 2-15 | Cyclic olefin copolymer | / | / | 62:38 | 70 | No lithium precipitation | 86.7 | 91.9 | 0/10 |

Note: "/" in Table 2 means that a related preparation parameter does not exist.

The type and melting point of the thermal stable resin usually affect the safety performance of the lithium-ion battery. It can be seen from Example 1-3 and Examples 2-1 to 2-9 that when the type and melting point of the thermal stable resin are within the range in this application, the lithium-ion battery exhibits a higher hot box pass rate, thereby indicating that the lithium-ion battery has better safety performance.

The type and glass transition temperature of the thermal stable resin usually affect the safety performance of the lithium-ion battery. It can be seen from Examples 2-10 to 2-15 that when the type and glass transition temperature of the thermal stable resin are within the range in this application, the lithium-ion battery exhibits a higher hot box pass rate, thereby indicating that the lithium-ion battery has better safety performance.

**Table 3**

| | y1:x1 | y2:x2 | Heat setting temperature (°C) | D1 (nm) | D2 (nm) | Conductivity of base film (ms/cm) | Ratio of conductivity of base film to conductivity of electrolyte | Concentration of lithium salt in electrolyte-(mol/L) | Conductivity of electrolyte (ms/cm) | Contact angle between electrolyte and base film (°) | Lithium precipitation degree | Cycling capacity retention rate of the 500th cycle at 25°C (%) | Discharge capacity retention rate at 3.0C (%) | Hot box Performance |
|---|---|---|---|---|---|---|---|---|---|---|---|---|---|---|
| Example 1-3 | 27:73 | 31:69 | 129 | 80 | 45 | 2.25 | 0.3 | 0.55 | 7.5 | 20 | No lithium precipitation | 86.5 | 91.2 | 10/10 |
| Example 3-1 | 30:70 | 32:68 | 132 | 50 | 27 | 0.375 | 0.05 | 0.55 | 7.5 | 20 | No lithium precipitation | 86 | 90.5 | 10/10 |
| Example 3-2 | 30:70 | 32:68 | 131 | 53 | 36 | 0.75 | 0.1 | 0.55 | 7.5 | 20 | No lithium precipitation | 86.2 | 90.7 | 10/10 |
| Example 3-3 | 29:71 | 31:69 | 130 | 57 | 40 | 1.5 | 0.2 | 0.55 | 7.5 | 20 | No lithium precipitation | 86.3 | 91.0 | 10/10 |
| Example 3-4 | 25:75 | 31:69 | 128 | 110 | 47 | 3 | 0.4 | 0.55 | 7.5 | 20 | No lithium precipitation | 87.1 | 91.7 | 10/10 |
| Example 3-5 | 23:77 | 29:71 | 126 | 180 | 50 | 3.75 | 0.5 | 0.55 | 7.5 | 20 | No lithium precipitation | 87.5 | 92.1 | 9/10 |
| Example 3-6 | 22:78 | 26:74 | 125 | 270 | 58 | 4.5 | 0.6 | 0.55 | 7.5 | 20 | No lithium precipitation | 87.9 | 92.7 | 8/10 |
| Example 3-7 | 30:70 | 33:67 | 133 | 41 | 15 | 0.075 | 0.01 | 0.55 | 7.5 | 20 | Slight lithium pre-cipitation | 84.3 | 88.1 | 8/10 |
| Example 3-8 | 20:80 | 22:78 | 122 | 400 | 69 | 6 | 0.8 | 0.55 | 7.5 | 20 | No lithium precipitation | 88.2 | 93.1 | 2/10 |

| | y1:x1 | y2:x2 | Heat setting temperature (°C) | D1 (nm) | D2 (nm) | Conductivity of base film (ms/cm) | Ratio of conductivity of base film to conductivity of electrolyte | Concentration of lithium salt in electrolyte-(mol/L) | Conductivity of electrolyte (ms/cm) | Contact angle between electrolyte and base film (°) | Lithium precipitation degree | Cycling capacity retention rate of the 500th cycle at 25°C (%) | Discharge capacity retention rate at 3.0C (%) | Hot box Performance |
|---|---|---|---|---|---|---|---|---|---|---|---|---|---|---|
| Example 3-9 | 28:72 | 31:69 | 130 | 68 | 43 | 2.1 | 0.3 | 0.4 | 7 | 5 | No lithium precipitation | 85.3 | 90.4 | 9/10 |
| Example 3-10 | 25:75 | 31:69 | 128 | 110 | 47 | 3 | 0.3 | 0.81 | 10 | 33 | No lithium precipitation | 87.8 | 92.3 | 10/10 |
| Example 3-11 | 24:76 | 29:71 | 126.5 | 167 | 49 | 3.6 | 0.3 | 0.93 | 12 | 41 | No lithium precipitation | 88.3 | 92.6 | 10/10 |
| Example 3-12 | 22:78 | 26:74 | 125 | 270 | 58 | 4.5 | 0.3 | 1.01 | 15 | 48 | No lithium precipitation | 89.1 | 93.5 | 9/10 |
| Example 3-13 | 22:78 | 23:77 | 124 | 310 | 63 | 5.1 | 0.3 | 1.05 | 17 | 56 | No lithium precipitation | 89.4 | 93.8 | 8/10 |
| Example 3-14 | 20:80 | 22:78 | 122 | 400 | 69 | 6 | 0.3 | 1.1 | 20 | 60 | No lithium precipitation | 89.9 | 94.1 | 8/10 |
| Example 3-15 | 29:71 | 31:69 | 133 | 57 | 40 | 1.5 | 0.3 | 0.3 | 5 | 3 | Slight lithium pre-cipitation | 84.1 | 85.2 | 6/10 |
| Example 3-16 | 18:82 | 21:79 | 120 | 500 | 80 | 7.5 | 0.3 | 1.2 | 25 | 70 | No lithium precipitation | 86.3 | 88.1 | 2/10 |

The conductivity of the base film to the conductivity of the electrolyte usually affects the charging and discharging rate performance, lithium precipitation, and cycling performance of the lithium-ion battery. It can be seen from Example 1-3 and Examples 3-1 to 3-8 that when the ratio of the conductivity of the base film to the conductivity of the electrolyte is within the range in this application, the lithium-ion battery exhibits a lower lithium precipitation degree, a higher cycling capacity retention rate of the 500th cycle at 25°C, and a higher discharge capacity retention rate at 3.0C, thereby indicating that the lithium-ion battery has better charging and discharging rate performance and cycling performance and further alleviated lithium precipitation.

The conductivity of the electrolyte usually affects the charging and discharging rate performance, lithium precipitation, and cycling performance of the lithium-ion battery. It can be seen from Example 1-3 and Examples 3-9 to 3-16 that when the conductivity of the electrolyte is within the range in this application, the lithium-ion battery exhibits a lower lithium precipitation degree, a higher cycling capacity retention rate of the 500th cycle at 25°C, and a higher discharge capacity retention rate at 3.0C, thereby indicating that the lithium-ion battery has better charging and discharging rate performance and cycling performance and further alleviated lithium precipitation.

The contact angle between the electrolyte and the base film usually affects the lithium precipitation and fast charging and discharging performance of the lithium-ion battery. It can be seen from Example 1-3 and Examples 3-9 to 3-16 that when the contact angle between the electrolyte and the base film is within the range in this application, the lithium-ion battery exhibits a lower lithium precipitation degree and a higher discharge capacity retention rate at 3.0C, thereby indicating that the lithium-ion battery has better fast charging and discharging performance and further alleviated lithium precipitation.

It should be noted that relational terms such as "first" and "second" herein are only used to distinguish one entity or operation from another entity or operation, and do not necessarily require or imply that there is any such actual relationship or order between these entities or operations. In addition, the terms "include", "comprise", or any of their variants are intended to cover a non-exclusive inclusion, such that a process, method, or article that includes a series of elements includes not only those elements but also other elements that are not expressly listed, or further includes elements inherent to such process, method, or article.

Various embodiments in this specification are described in a related manner. For a part that is the same or similar between different embodiments, reference may be made between these embodiments. Each embodiment focuses on differences from other embodiments.

The foregoing descriptions are merely preferable embodiments of this application, but are not intended to limit this application. Any modification, equivalent replacement, or improvement made without departing from the spirit and principle of this application shall fall within the protection scope of this application.

## Claims

1.  A secondary battery, comprising a positive electrode plate, a negative electrode plate, an electrolyte, and a separator; the separator is disposed between the positive electrode plate and the negative electrode plate;

    **characterized in that**, the separator comprises a base film, a pore size distribution of pores in the base film is a bimodal distribution;
    a pore size of pores on a side of the base film facing the negative electrode plate is larger than a pore size of pores on a side of the base film facing the positive electrode plate; the pore size of the pores on the side of the base film facing the negative electrode plate is 60 nm to 500 nm, and the pore size of the pores on the side of the base film facing the positive electrode plate is 5 nm to 55 nm.

2.  The secondary battery according to claim 1, **characterized in that**, the pore size of the pores on the side of the base film facing the negative electrode plate is 80 nm to 300 nm.

3.  The secondary battery according to claim 1 or 2, **characterized in that**, the pore size of the pores on the side of the base film facing the positive electrode plate is 15 nm to 55 nm.

4.  The secondary battery according to claim 1, **characterized in that**, a thickness of a region of the side of the base film facing the negative electrode plate is H1, a thickness of a region of the side of the base film facing the positive electrode plate is H2, and $50\% \leq H1/(H1+H2) \times 100\% \leq 80\%$.

5.  The secondary battery according to claim 4, **characterized in that**, $55\% \leq H1/(H1+H2) \times 100\% \leq 80\%$.

6.  The secondary battery according to claim 1, **characterized in that**, the side of the base film facing the negative electrode plate comprises a first polymer, the first polymer comprises polyethylene, a weight-average molecular weight of the first polymer is 600000 to 1500000, and a melting point of the first polymer is 134°C to 140°C.

7. The secondary battery according to claim 6, **characterized in that**, the weight-average molecular weight of the first polymer is 600000 to 1000000, and the melting point of the first polymer is 134°C to 139°C.

8. The secondary battery according to claim 6, **characterized in that**, the side of the base film facing the negative electrode plate further comprises a thermally stable resin, the thermally stable resin comprises at least one of polypropylene or poly(4-methylpentene), and a melting point of the thermally stable resin is 160°C to 260°C.

9. The secondary battery according to claim 6, **characterized in that**, the side of the base film facing the negative electrode plate further comprises a thermally stable resin, the thermally stable resin comprises a cyclic olefin copolymer, and a glass transition temperature of the cyclic olefin copolymer is 80°C to 160°C.

10. The secondary battery according to claim 1, **characterized in that**, the side of the base film facing the positive electrode plate comprises a second polymer, the second polymer comprises polyethylene, a weight-average molecular weight of the second polymer is 200000 to 600000, and a melting point of the second polymer is 120°C to 134°C.

11. The secondary battery according to claim 10, **characterized in that**, the weight-average molecular weight of the second polymer is 200000 to 500000, and the melting point of the second polymer is 126°C to 132°C.

12. The secondary battery according to claim 1, **characterized in that**, a ratio of a conductivity of the base film to a conductivity of the electrolyte is 0.05 to 0.6, and the conductivity of the electrolyte is 7 ms/cm to 20 ms/cm.

13. The secondary battery according to claim 1, **characterized in that**, the conductivity of the electrolyte is 7.5 ms/cm to 15 ms/cm.

14. The secondary battery according to claim 1, **characterized in that**, a contact angle between the electrolyte and the base film is 5° to 60°.

15. An electronic apparatus, **characterized in that**, the electronic apparatus comprises the secondary battery according to any one of claims 1 to 14.

FIG. 1

FIG. 2

Europäisches
Patentamt
European
Patent Office
Office européen
des brevets

# EUROPEAN SEARCH REPORT

**Application Number**

EP 24 19 5041

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2007 179847 A (DOUBLE SCOPE KK) 12 July 2007 (2007-07-12) * paragraph [0015] * ----- | 1-15 | INV. H01M10/0525 H01M50/417 H01M50/449 |
| A | JP 2002 279956 A (SONY CORP) 27 September 2002 (2002-09-27) * example 6; table 1 * ----- | 1-15 | H01M50/491 |

**TECHNICAL FIELDS SEARCHED (IPC)**

H01M

The present search report has been drawn up for all claims

| Place of search | Date of completion of the search | Examiner |
|---|---|---|
| Munich | 3 January 2025 | Steinreiber, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 5041

This annex lists the patent family members relating to the patent documents cited in the above-mentioned European search report.
The members are as contained in the European Patent Office EDP file on
The European Patent Office is in no way liable for these particulars which are merely given for the purpose of information.

03-01-2025

| Patent document cited in search report | Publication date | Patent family member(s) | | Publication date |
|---|---|---|---|---|
| JP 2007179847 A | 12-07-2007 | JP | 4369921 B2 | 25-11-2009 |
| | | JP | 2007179847 A | 12-07-2007 |
| JP 2002279956 A | 27-09-2002 | NONE | | |

EPO FORM P0459

For more details about this annex : see Official Journal of the European Patent Office, No. 12/82